# EUROPEAN PATENT SPECIFICATION

(11) **EP 0 697 005 B1**
(45) Date of publication and mention of the grant of the patent: **01.10.1997**
(21) Application number: 94915737.4
(22) Date of filing: 10.05.1994
(51) Int. Cl.: B65G 17/12

(54) **TRANSPORT DEVICE WITH LOAD CARRIERS FOR THE TRANSPORT OF GOODS**
FÖRDERVORRICHTUNG MIT LASTTRÄGERN FÜR STÜCKGUT
DISPOSITIF DE TRANSPORT A PORTE-CHARGE POUR LE TRANSPORT DE MARCHANDISES

(30) Priority: 11.05.1993 SE 9301612
(43) Date of publication of application: 21.02.1996
(73) Proprietor: STAR CONVEYOR AB, S-591 22 Motala (SE)
(72) Inventor: RAGNARSSON, Lars, S-591 37 Motala (SE); JOHANSSON, Leif, S-592 00 Vadstena (SE)
(74) Representative: Willquist, Bo
(86) International application number: SE9400431
(87) International publication number: WO9426637

(56) References cited:
- EP-A- 0 203 898
- WO-A-89/06632
- FR-A- 2 128 182

## Description

The present invention relates to a transport arrangement with a load carrier for the transport of goods comprising an endless conveyor belt built up of links, which is so arranged as to run in a recessed track with a bottom and parallel side walls, in conjunction with which a load carrier with or without goods is transported in the direction of movement of the belt through friction between the belt and the load carrier and is held stationary on the belt by overcoming the friction at predetermined stations along the belt, and in conjunction with which support rails are arranged parallel with the track and to either side of it, and the load carriers are executed with two carriages arranged one after the other, attached to one another in a mutually articulated manner and guided by the aforementioned side walls, each of which carriages is supported by support wheels running on the support rails for the purpose of bearing most of the weight of the goods.

Such transport arrangements are commonly encountered in conjunction with the large-scale manufacture of products, when blanks for these products or component parts which are to be assembled into a product are transported between different process or assembly stations, - see for example EP-A-0 203 898.

The fact that most of the weight of the product transported on a load carrier is supported by the support rails through the support wheels of the load carrier is an advantage when transporting heavier products, although when transporting lighter products the normal force, and thus the frictional force acting between the conveyor belt and the load carrier can become too low, with the result that slipping occurs between the conveyor belt and the load carrier. In order to prevent such slipping, which means that the load carrier with its product stops at undesired points along the conveyor belt, a previously disclosed arrangement involves positioning a spring device between the load carrier and the belt, by means of which the normal force and thus the frictional force against the conveyor belt are increased. A disadvantage of this solution to the aforementioned slipping problems is that the spring force of the spring device remains constant, or is capable of variation along the length of the track only with difficulty. It is thus not possible to take account of the changes in normal force which occur when the load carrier, with or without product, is required to move along an upward incline.

One object of the present invention is to eliminate or, at any rate, to reduce the effect of the above-mentioned disadvantage. This is achieved in accordance with the invention in that, for the purpose of bearing the residual weight of the goods, each carriage has a guide shoe so arranged as to make contact with the conveyor belt, in that the bottom of the track is so arranged as to produce a spring effect in a direction parallel with the side walls and normal to the plane of the track, and in that the spring effect varies along predetermined sections of the track.

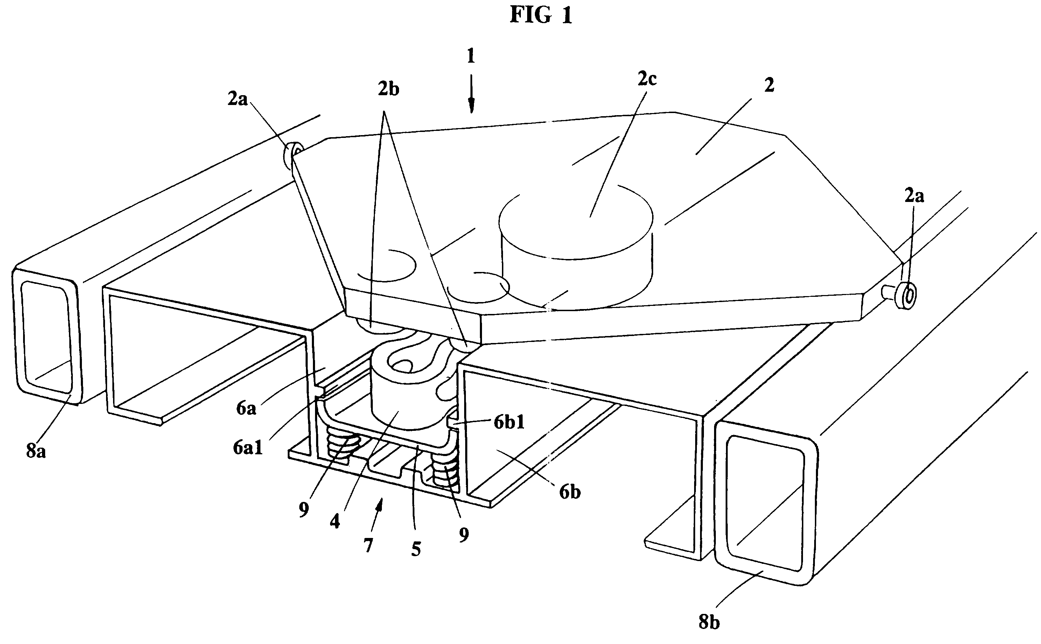

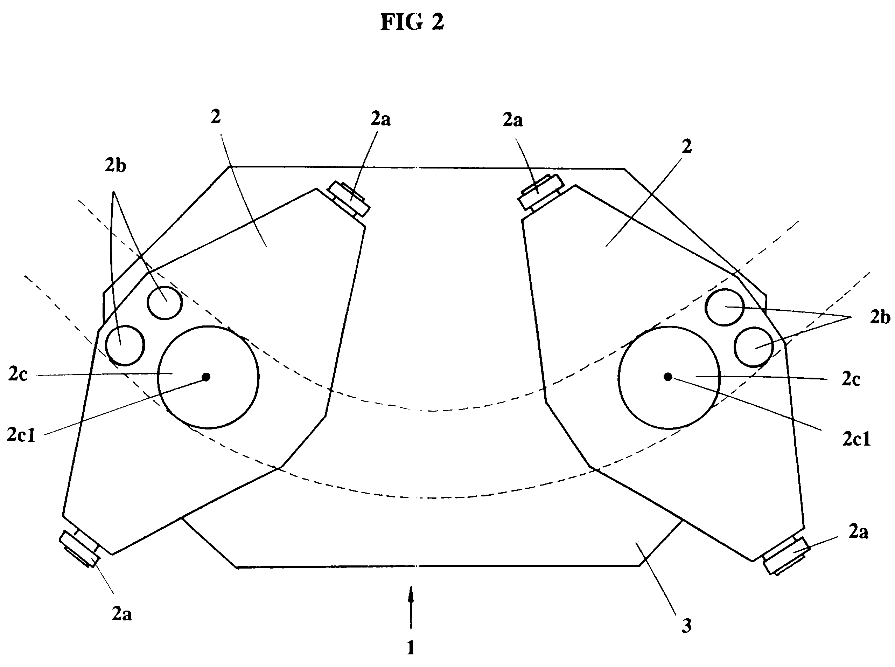

Further advantageous features of the invention can be appreciated from the sub-claims and the following description with reference to the drawing, in which Fig. 1 shows an illustrative embodiment of the invention schematically in a perspective view seen at an angle from above. Fig. 2 shows a load carrier for the transport arrangement in accordance with the invention seen in plan view from below.

The designation 1 is used in the drawing generally in respect of a load carrier, which comprises a goods plate 3 supported by two carriages 2, although only one such carriage 2 included in a load carrier is illustrated in Fig. 1. Each carriage 2 is pivotally mounted on the goods plate 3 and has two support wheels 2a, two guide wheels 2b and a guide shoe 2c, which is pivotally mounted on the goods plate 3 with an axis of rotation 2cl which coincides with the mounting axis of the carriage to the goods plate 3.

The load carrier 1 is so arranged as to interact with a transport track comprising an endless conveyor belt of a conventional kind built up of mutually identical links 4. The links are designed and mutually connected to one another in such a way that the belt is flexible both laterally and in an upward/downward sense. The belt is so arranged as to run recessed into track of U-shaped cross-section, which is formed by a bottom 5 and mutually parallel side walls 6a, 6b. The distance between these is adapted to the width of the conveyor belt, and the guide wheels 2b are so arranged as to run along the side walls 6a, 6b. The track in the example illustrated here is a profile generally designated as 7. Arranged to either side of the profile 7 and parallel with the track are support rails 8a, 8b, which are intended for the support wheels 2a of the carriages, via which wheels most of the weight of the goods placed on the goods plate 3 is supported.

The guide shoe 2c is so arranged in accordance with the invention as to be in contact with the conveyor belt for the purpose of bearing the residual weight of the goods, that is to say the weight that is not supported by the support wheels 2a against the support rails 8a, 8b. The bottom 5 of the track is so arranged as to produce a spring effect in a direction parallel with the side walls 6a, 6b and normal to the plane of the track. In the embodiment illustrated in the drawing, the bottom 5 of the track consists of a plate profile, the cross-section of which exhibits the form of a broad 'U'. Arranged between the bottom 5 of the track and an adjacent part of the profile 7 are spiral springs 9, so executed as to force the bottom 5 of the track upwards, in conjunction with which the upward movement of the bottom 5 of the track is restricted by two flanges 6a1, 6b1 facing towards one another and projecting away from the side walls 6a, 6b. A frictional force well adapted to the weight of the goods, which both provides reliable transport between the process or assembly stations and permits the goods to be held stationary slipping on the belt by overcoming the friction, is achieved in this way between the conveyor belt and the load carrier 1. The illustrated construction permits the bottom 5 of the track to be replaced easily to compensate for wear. The guide shoe 2c is preferably cylindrical and mounted so that it is free to rotate about a shaft 2c1, the point of attachment of which to the carriage 2 coincides with the pivotal attachment of the carriage 2 to the goods plate 3. The shaft 2c1 also faces in a direction such that it forms a normal to the goods plate 3.

The springing provided for the bottom 5 of the track preferably exhibits a hardness which varies with the inclination of the track. Alternatively, or as a complementary feature, that hardness may be varied along sections of the track where the weight of the goods is not the same as it is on an adjacent section of the track, for example as the result of a component being fitted at a station.

It is obvious to a person skilled in the art that the invention can be modified in many respects within the scope of the idea of invention. Thus, for example, springing can be achieved with the help of spring devices other than the spiral springs 9, for instance by the use of spring pads or gas-filled hoses.

## Claims

1. Transport arrangement with a load carrier (1) for the transport of goods comprising an endless conveyor belt built up of links (4), which is so arranged as to run in a recessed track with a bottom (5) and parallel side walls (6a, 6b), in conjunction with which a load carrier (1) with or without goods is transported in the direction of movement of the belt through friction between the belt and the load carrier (1) and is held stationary on the belt by overcoming the friction at predetermined stations along the belt, and in conjunction with which support rails (8a, 8b) are arranged parallel with the track and to either side of it, and the load carriers (1) are executed with two carriages (2) arranged one after the other, attached to one another in a mutually articulated manner and guided by the aforementioned side walls (6a, 6b), each of which carriages is supported by support wheels (2a) running on the support rails (8a, 8b) for the purpose of bearing most of the weight of the goods, ***characterized*** in that, for the purpose of bearing the residual weight of the goods, each carriage has a guide shoe (2c) so arranged as to make contact with the conveyor belt, in that the bottom (5) of the track is so arranged as to produce a spring effect in a direction parallel with the side walls and normal to the plane of the track, and in that the spring effect varies along predetermined sections of the track.

2. Arrangement in accordance with Patent Claim 1, ***characterized*** in that the aforementioned guide shoe (2c) is cylindrical and is rotatably mounted about a shaft (2c1), the point of attachment of which to the carriage (2) coincides with the pivotal attachment of the carriage (2) to a goods plate (3), which shaft also faces in a direction such that it is essentially perpendicular to the direction of transport and the recessed bottom (5) of the track.

3. Arrangement in accordance with Patent Claims 1 or 2, ***characterized*** in that a guide wheel (2b) in contact with the respective side wall (6a, 6b) is present to either side of the guide shoe (2c) and at a certain distance from it.

## Patentansprüche

1. Transportvorrichtung mit einem Lastenträger (1) zum Transport von Gütern, welche ein endloses Förderband umfaßt, das auf Gelenkstücken (4) aufgebaut ist, welches so angeordnet ist, daß es in einer vertieften Führung mit einem Boden (5) und parallelen Seitenwänden (6a, 6b) läuft, in Verbindung damit, daß ein Lastenträger (1) mit oder ohne Güter in der Bewegungsrichtung des Bandes durch Reibung zwischen dem Band und dem Lastenträger (1) transportiert wird und durch das Überwinden der Reibung an vorherbestimmten Stellen entlang des Bandes festgehalten wird, und in Verbindung damit, daß Stützschienen (8a, 8b) parallel zu der Führung und zu jeder Seite angeordnet sind und die Lastenträger (1) mit zwei Laufbrettern (2) aufgeführt sind, die nacheinander angeordnet sind, aneinander in einer gegenseitigen gelenkigen Weise beschäftigt sind und von den zuvor erwähnten Seitenwänden (6a, 6b) geführt werden, wobei jedes dieser Laufbretter unterstützt wird von Stützrädern (2a), die auf den Stützschienen (8a, 8b) laufen, um das meiste Gewicht der Güter zu tragen,
gekennzeichnet dadurch, daß
zum Zweck des Tragens des übrigen Gewichts der Güter jedes Laufbrett einen Führungsklotz (2c) hat, der so angeordnet ist, daß er Kontakt mit dem Förderband hat, dadurch, daß der Boden (5) der Führung so angeordnet ist, daß er einen Federeffekt in paralleler Richtung zu den Seitenwänden erzeugt und normal zu der Ebene der Führung und dadurch, daß der Federeffekt entlang der vorherbestimmten Stellen der Führung variiert.

2. Anordnung gemäß Anspruch 1, dadurch gekennzeichnet, daß der zuvor erwähnte Führungsklotz (2c) zylindrisch ist und drehbar an einen Schaft (2c1) montiert ist, der Befestigungspunkt dessen an das Laufbrett (2) mit der gelenkigen Befestigung des Laufbrettes (2) an eine Güterplatte (3) zusammentrifft, deren Schaft auch in eine Richtung zeigt, so daß er im Wesentlichen senkrecht zu der Transportrichtung und dem vertieften Boden (5) der Führung ist.

3. Anordnung gemäß der Ansprüche 1 oder 2, dadurch gekennzeichnet, daß ein Führungsrad (2b) in Führung mit der entsprechenden Seitenwand (6a, 6b) an jeder Seite des Führungsklotzes (2c) in einer bestimmten Entfernung von diesem vorhanden ist.

## Revendications

1. Dispositif de transport avec un porte-charge (1) pour le transport d'articles, comprenant une bande transporteuse sans fin constituée de maillons (4) qui est agencée de façon à se déplacer dans une voie en retrait ayant une paroi de fond (5) et des parois latérales parallèles (6a,6b), en association avec laquelle un porte-charge (1) avec ou sans articles est transporté dans la direction de mouvement de la bande par frottement entre la bande et le porte-charge (1) et il est immobilisé sur la bande par application d'une force de retenue supérieure au frottement à des stations prédéterminées le long de la bande, et en association avec laquelle des rails d'appui (8a,8b) sont prévus parallèlement à la voie et de part et d'autre de celle-ci, et les porte-charge (1) sont exécutés avec deux chariots (2) agencés l'un derrière l'autre, attachés l'un à l'autre d'une manière mutuellement articulée et guidés par les parois latérales précitées (6a,6b), chacun de ces chariots étant supporté par des galets d'appui (2a) qui roulent sur les rails d'appui (8a,8b) dans le but de supporter la plus grande partie du poids des articles, caractérisé en ce que, dans le but de supporter le poids résiduel des articles, chaque chariot comprend un sabot de guidage (2c) agencé de manière à venir en contact avec la bande transporteuse, en ce que le fond (5) de la voie est agencé de manière à produire un effet élastique dans une direction parallèle aux parois latérales et perpendiculaire au plan de la voie, et en ce que l'effet élastique varie le long de parties prédéterminées de la voie.

2. Dispositif suivant la revendication 1, caractérisé en ce que le sabot de guidage précité (2c) est cylindrique et il est monté de façon tournante autour d'un arbre (2c1) dont le point de fixation au chariot (2) coïncide avec la fixation pivotante du chariot (2) à une plaque de réception d'articles (3), ledit arbre étant également tourné dans une direction telle qu'il est sensiblement perpendiculaire à la direction de transport et au fond en retrait (5) de la voie.

3. Dispositif suivant la revendication 1 ou 2, caractérisé en ce qu'un galet de guidage (2b) en contact avec la paroi latérale respective (6a,6b) est présent de part et d'autre du sabot de guidage (2c) et à une certaine distance de celui-ci.
